# EUROPEAN PATENT APPLICATION

(11) **EP 4 745 620 A1**
(43) Date of publication of application: **20.05.2026**
(21) Application number: 25214424.1
(22) Date of filing: 07.11.2025
(51) Int. Cl.: G01S 7/48, G01S 17/42, G01S 17/87, G01S 17/89, G01S 17/931, G06V 20/58

(54) **COMPUTER SYSTEM AND METHOD FOR OBSTACLE PERCEPTION**

(30) Priority: 14.11.2024 SE 2451142
(71) Applicant: Volvo Autonomous Solutions AB, 405 08 Göteborg (SE)
(72) Inventor: GUSTAVSSON, Viktor, VÄSTERÅS (SE)
(74) Representative: Ström & Gulliksson AB

(57) **Abstract**

A computer system comprising processing circuitry is provided. The processing circuitry is configured to: obtain a first local ground plane estimation (LE1) of a first ground area (GA1) based on a first set of LIDAR data (202); obtain a second local ground plane estimation (LE2) of a second ground area (GA2), at least partly overlapping the first ground area (GA1), based on a second set of LIDAR data (204); fuse the first and second local ground plane estimations (LE1, LE2) to form a fused ground plane estimation (FE); and identify an obstacle separated from ground using the fused ground plane estimation (FE).

## Description

### TECHNICAL FIELD

The disclosure relates generally to a computer system. In particular aspects, the disclosure relates to computer systems and methods for obstacle perception. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is common to deploy vehicles, such as autonomous or driverless working machines, in confined areas. For smooth and robust operation obstacle detection has proven to be important, and for this purpose a vehicle may be equipped with an obstacle perception system.

Obstacle perception systems may be based on 3D data points, e.g. provided by a LIDAR, to infer obstacles in the surrounding environment. However as LIDAR data gets sparser farther away from the sensor, far away from the sensor a dedicated ground plane separation algorithm may have difficulties in distinguishing an obstacle from the ground. Hence, it is difficult to separate obstacles from ground using only the most concurrent LIDAR data.

### SUMMARY

According to a first aspect of the disclosure, a computer system is provided. The computer system comprises processing circuitry configured to: obtain a first local ground plane estimation of a first ground area based on a first set of LIDAR data; obtain a second local ground plane estimation of a second ground area, at least partly overlapping the first ground area, based on a second set of LIDAR data; fuse the first and second local ground plane estimations to form a fused ground plane estimation; and identify an obstacle separated from ground using the fused ground plane estimation. The first aspect of the disclosure may seek to improve the resolution of the LIDAR data, thereby also increasing the accuracy of the resulting ground plane estimation. A technical benefit may include increased possibility to detect or perceive obstacles from the fused ground plane estimation.

Optionally in some examples, including in at least one preferred example, the second ground area overlaps the first ground area by an overlap portion, and wherein the spatial resolution of the second set of LIDAR data in said overlap portion is greater than the spatial resolution of the first set of LIDAR data in said overlap portion. A technical benefit may include that low resolution data is complemented, or replaced, by high resolution data.

Optionally in some examples, including in at least one preferred example, the processing circuitry is further configured to: obtain the first and second set of LIDAR data from at least one LIDAR sensor attached to one or more vehicles. A technical benefit may include the possibility to obtain the fused ground plane estimation during driving, thereby improving the capability to rapidly provide the LIDAR data.

Optionally in some examples, including in at least one preferred example, the processing circuitry is further configured to: obtain the first set of LIDAR data when one vehicle is located at a first position along a travel path, and obtain the second set of LIDAR data when one vehicle is located at a second position downstream the travel path. A technical benefit may include the ability to use the same equipment during ground plane estimation, thereby reducing complexity and cost for obstacle perception and detection.

Optionally in some examples, including in at least one preferred example, the processing circuitry is further configured to: identify an obstacle separated from ground using the fused ground plane estimation and a set of real time LIDAR data. A technical benefit may include further increasing the usability of the same or a single equipment.

Optionally in some examples, including in at least one preferred example, the set of real time LIDAR data is the first or second set of LIDAR data. A technical benefit may include increasing processing speed and reducing the need for separate LIDAR data.

Optionally in some examples, including in at least one preferred example, the first set of LIDAR data is provided by a first vehicle, and wherein the second set of LIDAR data is provided by a second vehicle. A technical benefit may include the possibility to share LIDAR data, thereby allowing a vehicle upfront to provide LIDAR data of improved resolution to a vehicle behind.

Optionally in some examples, including in at least one preferred example, the processing circuitry is further configured to: upload each set of LIDAR data to a remote server; and transmit the fused ground plane estimation from the remote server to the first and second vehicle. A technical benefit may include that each vehicle of a fleet of vehicles contributes to the creation of an improved ground plane estimation, and ensuring that all vehicles have access to the same ground plane estimation.

Optionally in some examples, including in at least one preferred example, the processing circuitry is further configured to: upload each local ground plane estimation to the remote server; and transmit the fused ground plane estimation from the remote server to the first and second vehicle. A technical benefit may include that reduced processing power is required at the remote server, as each vehicle by its own provides a local ground plane estimation.

Optionally in some examples, including in at least one preferred example, the processing circuitry is further configured to: fuse the first and second local ground plane estimations by implementing a fusing algorithm locally at the first and/or second vehicle; upload the fused ground plane estimation to the remote server; and transmit the fused ground plane estimation from the remote server to the first and second vehicle. A technical benefit may include using decentralized processing power to create the fused ground plane estimations, allowing each vehicle to contribute in real time to produce fast and reliable data.

Optionally in some examples, including in at least one preferred example, the processing circuitry is further configured to: identify an obstacle by implementing an obstacle detection algorithm locally at the first and/or second vehicle. A technical benefit may include fast and efficient obstacle perception without relying on possible restrictions relating to data transfer.

Optionally in some examples, including in at least one preferred example, the processing circuitry is further configured to: obtain a third local ground plane estimation of the first and/or second ground area based on a third set of LIDAR data; and update the fused ground plane estimation based on the third local ground plane estimation. A technical benefit may include real time updating of the ground plane estimation, thereby rapidly obtaining relevant information concerning sudden changes in the ground plane estimation.

Optionally in some examples, including in at least one preferred example, the second ground area overlaps the first ground area by an overlap portion, and wherein the spatial resolution of the second set of LIDAR data in said overlap portion is greater than the spatial resolution of the first set of LIDAR data in said overlap portion; wherein the processing circuitry is further configured to: obtain the first and second set of LIDAR data from LIDAR sensors attached to a first and a second vehicle; obtain the first set of LIDAR data when the first vehicle is located at a first position along a travel path, and obtain the second set of LIDAR data when the second vehicle is located at a second position downstream the travel path; identify an obstacle separated from ground using the fused ground plane estimation and the first or second set of LIDAR data; wherein the processing circuitry is further configured to: upload each set of LIDAR data or each local ground plane estimation to a remote server; and transmit the fused ground plane estimation from the remote server to the first and second vehicle; wherein the processing circuitry is further configured to: identify an obstacle by implementing an obstacle detection algorithm locally at the first and/or second vehicle; obtain a third local ground plane estimation of the first and/or second ground area based on a third set of LIDAR data; update the fused ground plane estimation based on the third local ground plane estimation; and store the updated fused ground plane estimation. A technical benefit may include the possibility to always have an updated backup of the latest ground plane estimation.

According to a second aspect of the disclosure, a computer system is provided. The computer system comprises processing circuitry configured to: obtain a first local ground plane estimation of a first ground area based on a first set of LIDAR data from a first vehicle; obtain a second local ground plane estimation of a second ground area, at least partly overlapping the first ground area, based on a second set of LIDAR data from a second vehicle; and fuse the first and second local ground plane estimations to form a fused ground plane estimation. The second aspect of the disclosure may seek to allow for a more safe operation of a fleet of vehicles by receiving and sharing data from multiple vehicles, thereby ensuring that improved resolution of the LIDAR data can be provided faster and more efficient, thereby also increasing the accuracy of the resulting ground plane estimation. A technical benefit may include increased possibility to detect or perceive obstacles from the fused ground plane estimation.

According to a third aspect of the disclosure, a vehicle is provided. The vehicle comprises the computer system of the second aspect. The third aspect of the disclosure may seek to allow more safe operation of vehicles by improving the resolution of the LIDAR data, thereby also increasing the accuracy of the resulting ground plane estimation. A technical benefit may include increased possibility to detect or perceive obstacles from the fused ground plane estimation.

According to a fourth aspect of the disclosure, a fleet of vehicles is provided. The fleet of vehicles comprises at least a first vehicle and a second vehicle and a computer system of the first aspect. The fourth aspect of the disclosure may seek to allow for a more safe operation of a fleet of vehicles by receiving and sharing data from multiple vehicles, thereby ensuring that improved resolution of the LIDAR data can be provided faster and more efficient, thereby also increasing the accuracy of the resulting ground plane estimation. A technical benefit may include increased possibility to detect or perceive obstacles from the fused ground plane estimation.

According to a fifth aspect of the disclosure, a computer-implemented method is provided. The computer-implemented method comprises: obtaining, by processing circuitry of a computer system, a first local ground plane estimation of a first ground area based on a first set of LIDAR data; obtaining, by the processing circuitry, a second local ground plane estimation of a second ground area, at least partly overlapping the first ground area, based on a second set of LIDAR data; fusing, by the processing circuitry, the first and second local ground plane estimations to form a fused ground plane estimation; and identifying, by the processing circuitry, an obstacle separated from ground using the fused ground plane estimation. The fifth aspect of the disclosure may seek to allow more safe operation of vehicles by improving the resolution of the LIDAR data, thereby also increasing the accuracy of the resulting ground plane estimation. A technical benefit may include increased possibility to detect or perceive obstacles from the fused ground plane estimation.

According to a sixth aspect of the disclosure, a computer-implemented method is provided. The computer-implemented method comprises: obtaining, by processing circuitry of a computer system, a first local ground plane estimation of a first ground area based on a first set of LIDAR data from a first vehicle; obtaining, by the processing circuitry, a second local ground plane estimation of a second ground area, at least partly overlapping the first ground area, based on a second set of LIDAR data from a second vehicle; and fusing, by the processing circuitry, the first and second local ground plane estimations to form a fused ground plane estimation. The sixth aspect may seek to allow for a more safe operation of a fleet of vehicles by receiving and sharing data from multiple vehicles, thereby ensuring that improved resolution of the LIDAR data can be provided faster and more efficient, thereby also increasing the accuracy of the resulting ground plane estimation. A technical benefit may include increased possibility to detect or perceive obstacles from the fused ground plane estimation.

According to a seventh aspect of the disclosure, a computer program product is provided. The computer program product comprises program code for performing, when executed by the processing circuitry, the method of the fifth or sixth aspect. The seventh aspect of the disclosure may seek to allow more safe operation of vehicles by improving the resolution of the LIDAR data, thereby also increasing the accuracy of the resulting ground plane estimation. A technical benefit may include increased possibility to detect or perceive obstacles from the fused ground plane estimation.

According to an eighth aspect of the disclosure, a non-transitory computer-readable storage medium is provided. The non-transitory computer-readable storage medium comprises instructions, which when executed by the processing circuitry, cause the processing circuitry to perform the method of the fifth or sixth aspect. The eighth aspect of the disclosure may seek to allow more safe operation of vehicles by improving the resolution of the LIDAR data, thereby also increasing the accuracy of the resulting ground plane estimation. A technical benefit may include increased possibility to detect or perceive obstacles from the fused ground plane estimation.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary side view of a vehicle according to an example.
**FIG. 2** is an exemplary top view of a fleet of vehicles operating within an area according to an example.
**FIG. 3** is an exemplary top view of a vehicle using different sets of LIDAR data to obtain local ground plane estimations according to an example.
**FIGS. 4A-B**are schematic diagrams showing point clouds of LIDAR data according to different examples.
**FIG. 5** is an exemplary system diagram of an obstacle perception system according to an example.
**FIG. 6** is an exemplary system diagram of an obstacle perception system according to an example.
**FIG. 7** is an exemplary system diagram of an obstacle perception system according to an example.
**FIG. 8** is a flow chart of an exemplary method to detect an obstacle according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In general, the present disclosure provides a solution to the above-mentioned drawbacks by updating, either by replacement or by addition, LIDAR data of far ahead surroundings by LIDAR data of the same surroundings, but captured more close such that the low resolution data of the first capture of LIDAR data is replaced or completed by higher resolution LIDAR data of the second capture. By such improvement, any obstacle will be represented more distinct in the LIDAR data thereby allowing a more reliable and robust obstacle perception.

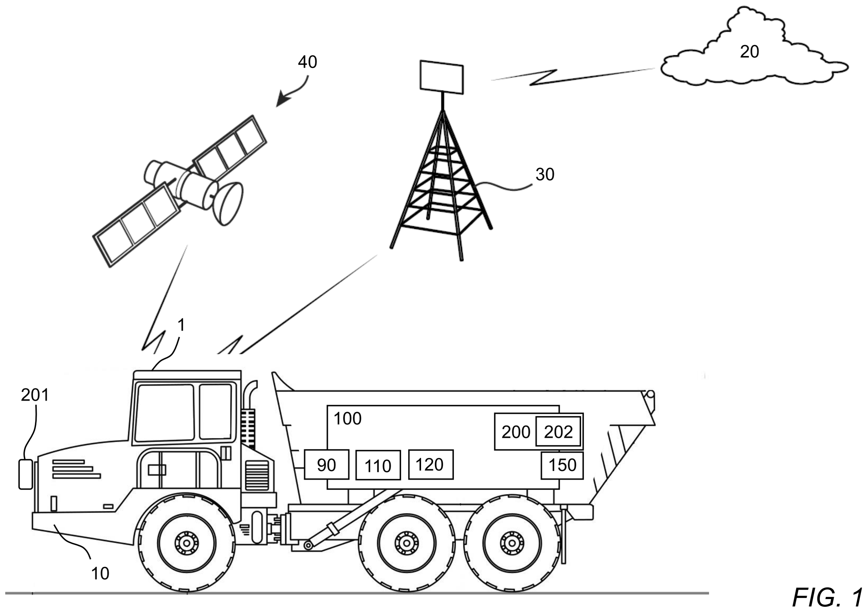

**FIG. 1** is an exemplary view of a vehicle **1** according to one example. The vehicle **1** comprises at least one propulsion system **10** used to propel the vehicle **1.** The at least one propulsion system **10** may comprise any type of drive unit, such as an internal combustion engine, or an electrical machine powered by an energy storage system, such as one or more batteries, configured to provide electrical energy to the electrical machine.

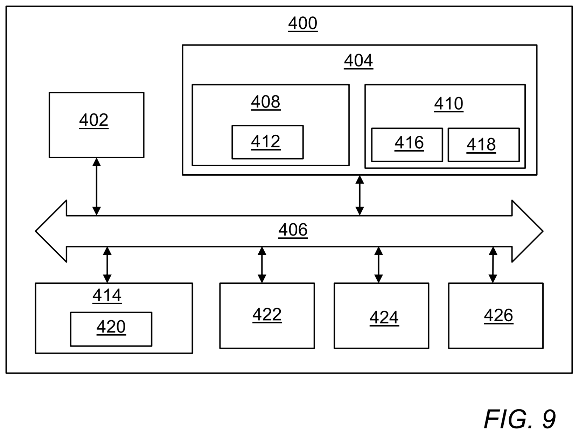

The vehicle **1** comprises, at least to some extent, processing circuitry **110** forming part of a computer system **100** (see **FIG. 9****).** The processing circuitry **110** is preferably configured to implement an autonomous drive system **150** which is configured to automatically control operation of the vehicle **1,** including driving and possibly also auxiliary operations such as loading/unloading, actuation of working components, etc. The processing circuitry **110** is also configured to implement an obstacle perception system **200.** The obstacle perception system **200** is configured to scan the surrounding environment using one or more LDIAR sensors **201,** at least ahead of the vehicle **1** along its travel path, and detect any obstacle that may be present and that may possible affect the vehicle **1** in driving along the intended travel path. Preferably, the obstacle perception system **200** is operatively connected to the autonomous drive system **150** (if present), such that the autonomous drive system **150** may respond to an obstacle detected by the obstacle perception system **200,** e.g. by possibly changing the travel path to avoid collision.

The vehicle **1** may further comprise communications circuitry **90** configured to receive and/or send communications. The communications circuitry **90** may be configured to enable the vehicle **1** to communicate with one or more external devices or systems such as a cloud server **20.** The communication with the external devices or systems may be directly or via a communications interface such as a cellular communications interface **30,** such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle 1 may for example be configured to utilize data obtain from the GNSS **40** to determine a geographical location of the vehicle **1.**

The vehicle **1** in **FIG. 1** comprises the computer system **100** and the obstacle perception system **200,** or at least parts thereof. The computer system **100** may be operatively connected to the obstacle perception system **200** and optionally to the communications circuitry **90** of the vehicle 1. The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.** The obstacle perception system **200** may comprise obstacle perception system processing circuitry **290;** the obstacle perception system processing circuitry **290** may be part of the processing circuitry **110** of the computer system **100.**

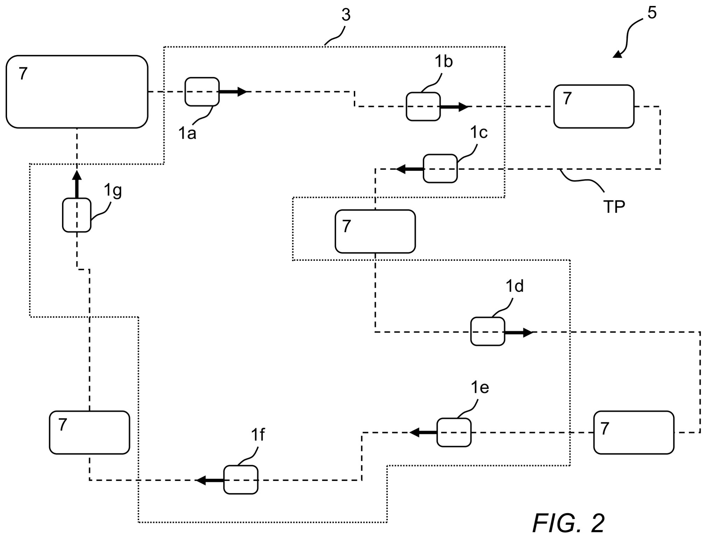

**FIG. 2** is a schematic layout of a fleet **3** of vehicles **1a-g** operating in a production environment **5.** Each vehicle **1a-g**, preferably being a driverless vehicle as described with reference to **FIG. 1****,** may be programmed or otherwise controlled to one or more dedicated tasks within the production environment **5.** For example, the production environment 5 may be a confined area, such as a mine or similar, formed by physical or virtual boundaries. Further, one or more production stations **7** may be distributed within the production environment **5,** and the vehicles **1a-g** may be programmed or otherwise controlled to perform one or more operations at said production stations **7.**

The vehicles **1a-g are** shown to be driving along a travel path **TP,** in a forward direction indicated by arrows. The vehicles **1a-g** thus travel along the same path **TP,** but they pass specific positions along the transport path **TP** at different times.

The vehicles **1a-g,** or at least one or more of the vehicles **1a-g** of the fleet **3** of vehicles, is configured to detect obstacles by implementing an obstacle perception system **200.**

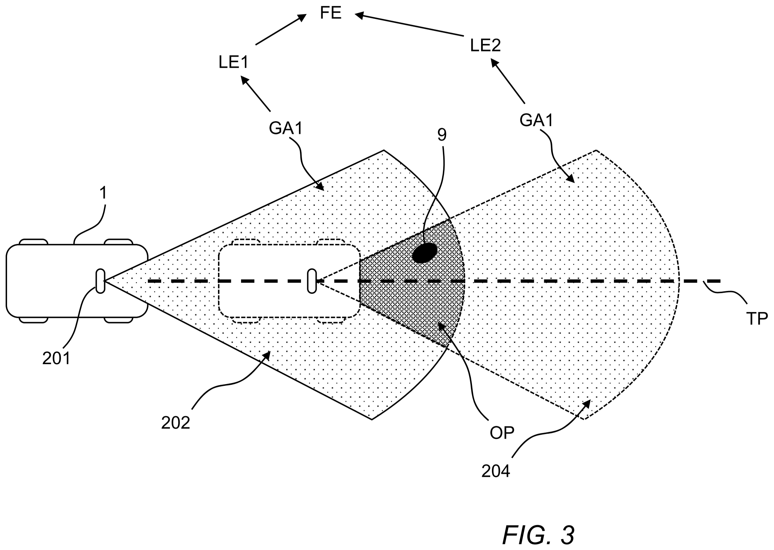

**FIG. 3** shows further details of how such obstacle detection may be implemented. The vehicle **1,** which may form part of a fleet 3 of vehicles, comprises a LIDAR sensor **201.** The LIDAR sensor **201** is preferably arranged to scan an area ahead of the vehicle **1** along its intended travel path **TP.** When the vehicle **1** is at a first position, corresponding to a specific point in time when driving along the travel path **TP,** the LIDAR sensor **201** will provide a first set of LIDAR data **202** representing a first ground area **GA1.** The first set of LIDAR data **202** may be represented by a point cloud having a varying resolution; the resolution is high close to the LIDAR sensor **201,** and the resolution gradually decreases farther away from the LIDAR sensor **201.** The first set of LIDAR data **202** is used to form a first local ground plane estimation **LE1** of the first ground area **GA1**. Due to the varying resolution of the first set of LIDAR data **202,** the accuracy of the first local ground plane estimation **LE1** will vary correspondingly.

When the vehicle **1** is at a second position, corresponding to another point in time when driving along the travel path **TP,** the LIDAR sensor **201** will provide a second set of LIDAR data **204** representing a second ground area **GA2.** As shown in **FIG.** 3, the second ground area **GA2** overlaps the first ground area **GA1** by a certain overlap area or overlap portion **OP.** The second set of LIDAR data **202** may be represented by a point cloud having a varying resolution; the resolution is high close to the LIDAR sensor **201,** and the resolution gradually decreases farther away from the LIDAR sensor **201.** The second set of LIDAR data **204** is used to form a second local ground plane estimation **LE2** of the second ground area **GA2.** Due to the varying resolution of the second set of LIDAR data **204,** the accuracy of the second local ground plane estimation **LE2** will vary correspondingly. This means that for the overlap portion **OP,** the second local ground plane estimation **LE2** will be more accurate than the first local ground plane estimation **LE1**, as the resolution of the underlying LIDAR data is of higher resolution. This is due to the fact that the spatial resolution of the second set of LIDAR data **204** in the overlap portion **OP** is greater than the spatial resolution of the first set of LIDAR data **202** in the overlap portion **OP.**

Based on the first and second local ground plane estimations **LE1, LE2,** a fused ground plane estimation **FE** is computed by fusing the first and second local ground plane estimations **LE1, LE2.** In practice this would typically mean that the portion of the first local ground plane estimation **LE1** corresponding to the overlap portion **OP** is replaced by the portion of the second local ground plane estimation **LE2** corresponding to the same overlap portion **OP.** It should however by realized that other types of fusing algorithms may be implemented as well.

Using the fused ground plane estimation **FE,** the vehicle **1** may identify an obstacle **9** separated from ground using the accurately obtained fused ground plane estimation **FE.**

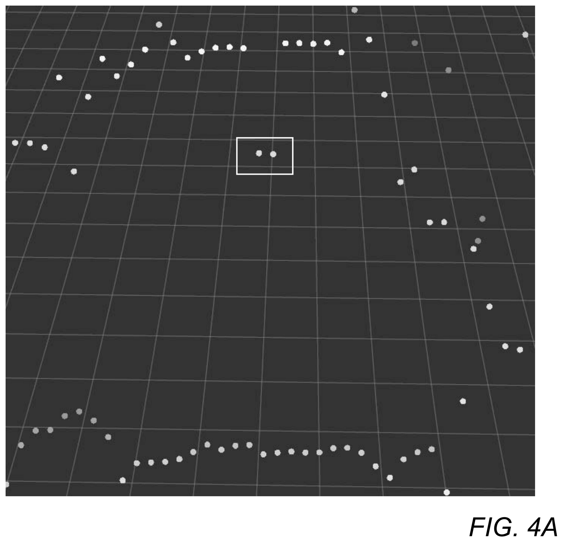

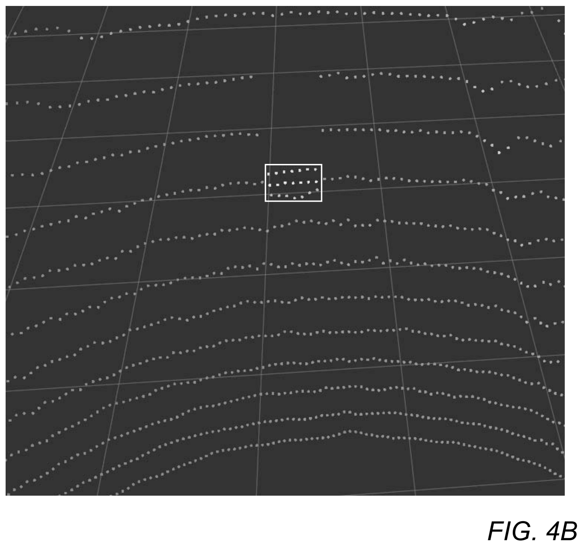

**FIGS. 4A** and **4B** show different point clouds representing a first and second set of LIDAR data, respectively. Starting in **FIG. 4A****,** an obstacle having a size of approximately 40x40 cm (indicated by the two points marked by a rectangle) is located about 25 m from the LIDAR sensor **201,** ahead of the vehicle 1. Here, it is difficult for a ground plane estimation algorithm to separate the obstacle from the ground plane, especially when considering that the algorithm would have to account for uneven ground, uphills, downhills, etc. With reference to **FIG. 4B** the same obstacle (indicated by the same rectangle) is arranged on a road (indicated by the remaining points) about 6 meters from the LIDAR sensor **201.** In this case the height of the obstacle is on the same order of magnitude as the distance between the ground detection points, and a ground plane estimation algorithms can easily separate the ground plane from the obstacle.

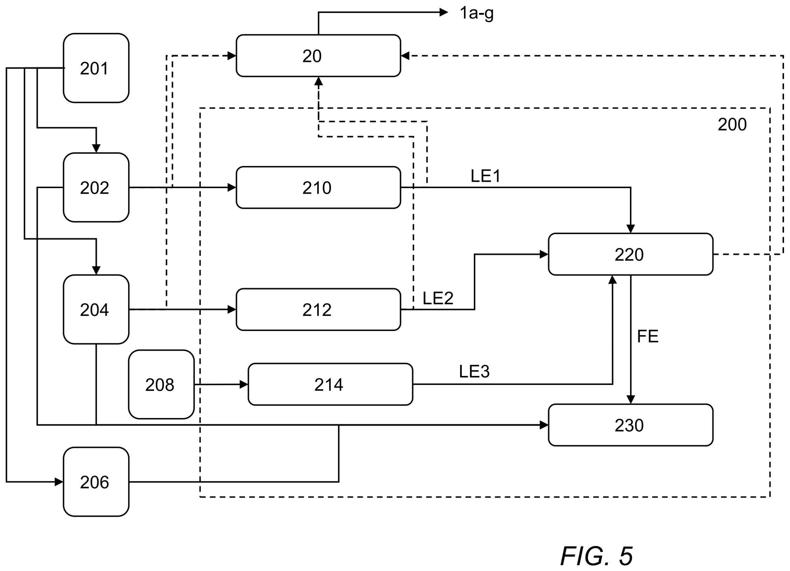

**FIG. 5** **is** an exemplary schematic view of an obstacle perception system **200.** The obstacle perception system **200** comprises a first local ground plane estimation obtainer **210.** The first local ground plane estimation obtainer **210** is configured to obtain a first local ground plane estimation **LE1** from a first set of LIDAR data **202.** For example, a suitable algorithm for obtaining the first local ground plane estimation **LE1** is RANSAC. Preferably, the first set of LIDAR data **202** is provided by a LIDAR sensor **201** arranged on a vehicle 1 traveling along a travel path **TP.**

The obstacle perception system **200** further comprises a second local ground plane estimation obtainer **212.** The second local ground plane estimation obtainer **212** is configured to obtain a second local ground plane estimation **LE2** from a second set of LIDAR data **204.** For example, a suitable algorithm for obtaining the second local ground plane estimation **LE2** is RANSAC. Preferably, the second set of LIDAR data **204** is provided by a LIDAR sensor **201** arranged on a vehicle **1** traveling along a travel path **TP.** The vehicles providing the first and second sets of LIDAR data **202, 204** may be the same vehicle using the same LIDAR sensor **201,** or they may be different vehicles.

In some examples, the first and second local ground plane estimation obtainers **210, 212** are implemented as a common local ground plane estimation obtainer.

The obstacle perception system **200** comprises a local ground plane estimation fuser **220.** The local ground plane estimation fuser **220** is configured to receive the first and second local ground plane estimations **LE1, LE2,** and to fuse these local ground plane estimations into a fused ground plane estimation **FE.** Fusing may be performed in various ways. For example, the ground plane estimation fuser **220** may determine the overlap area **OP** and the associated underlying data (or e.g. represented by an accuracy level), and use the local ground plane estimation with the highest accuracy to replace less accurate portions of other local ground plane estimations.

As is further shown **in** **FIG. 5****,** the obstacle perception system **200** further comprises a third local ground plane estimation obtainer **214.** The third local ground plane estimation obtainer **214** is configured to obtain a second local ground plane estimation **LE3** from a third set of LIDAR data **208.** Preferably, the third set of LIDAR data **208** is provided by a LIDAR sensor **201** arranged on a vehicle **1** traveling along a travel path **TP.** The vehicle providing the first, second, and third sets of LIDAR data **202, 204, 208** may be the same vehicle using the same LIDAR sensor **201,** or they may be different vehicles. The local ground plane estimation fuser **220** may be further configured to receive the third local ground plane estimation **LE3,** and to fuse this third local ground plane estimation **LE3** with the first and second local ground plane estimations **LE1, LE2** into the fused ground plane estimation **FE.**

The obstacle perception system **200** comprises an obstacle identifier **230.** The obstacle identifier **230** is configured to detect an obstacle **9** being separated from ground using the fused ground plane estimation **FE.** Such obstacle identifier **230** may operate by implementing a RANSAC algorithm, effectively classifying any object outlying the ground plane estimation as an obstacle. It should be noted that other obstacle identifying algorithms may be used as well.

In order to detect an obstacle, the obstacle perception system **200** may use a set of real time LIDAR data **206.** The set of real time LIDAR data **206** is preferably provided by a LIDAR sensor **201** during operation of a vehicle **1.** Notably, the set of real time LIDAR data **206** may be the first, second, or third set of LIDAR data **202, 204, 208** used to obtain the fused ground plane estimation **FE.** This means that the obstacle perception system **200** may operate in real time, using the same set of LIDAR data **202, 204, 208** to provide an improved ground plane estimation **FE** as well as to identify an obstacle separated from the ground plane estimation **FE.**

In order to further improve operation of a fleet **3** of vehicles **1,** data may be communicated via a cloud server **20.** The obstacle perception system **200** may e.g. be configured to upload the sets of LIDAR data **202, 204, 208** to the cloud server, or the first, second, and third local ground plane estimations **LE1, LE2, LE3** to the cloud server **20.** Alternatively, the obstacle perception system **200** may be configured to upload the fused ground plane estimation **FE** to the cloud server **20.** The cloud server **20** may be configured to transmit the fused ground plane estimation **FE** to several, or all, vehicles **1** of the fleet **3** of vehicles **1.** It is thus possible to have all vehicles **1** to operate using the same updated ground plane estimation **FE** thereby ensuring that all vehicles **1** have access to the best possible accuracy of the ground plane estimation **FE.**

A single vehicle **1,** such as the first vehicle **1** travelling along a transport path **TP,** may capture sequential sets of LIDAR data during its travel, and fusing resulting local ground plane estimations **LE1, LE2** as they are obtained from each newly captured set of LIDAR data. The fused ground plane estimation **FE** will consequently grow and update for each new capture of a set of LIDAR data. The next vehicle in operation may receive the fused ground plane estimations provided from the first vehicle, preferably through connection with a cloud server **20** or similar, thereby reducing the need for a separate ground plane estimation made by the second vehicle. Optionally, the second and any tailing vehicle may be configured to capture its own sets of LIDAR data. However, the fused ground plane estimation **FE** may only be updated if there is a change detected by the second vehicle.

The obstacle identifier **230** may be implemented locally at each vehicle 1, or it may be implemented remote, such as on a cloud server **20.**

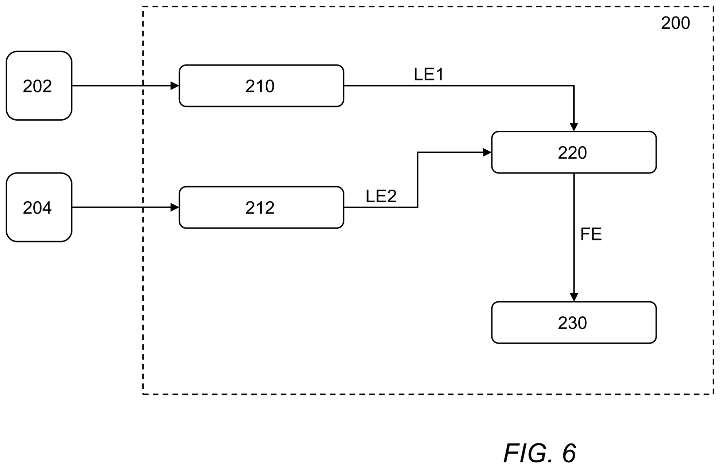

**FIG. 6** is a schematic layout of an obstacle perception system **200.** The obstacle perception system **200** comprises a first local ground plane estimation obtainer **210** configured to obtain a first local ground plane estimation **LE1** of a first ground area **GA1** based on a first set of LIDAR data **202.** The obstacle perception system **200** further comprises a second local ground plane estimation obtainer **212** configured to obtain a second local ground plane estimation **LE2** of a second ground area **GA2,** at least partly overlapping the first ground area **GA1**, based on a second set of LIDAR data **204.** The obstacle perception system **200** comprises a local ground plane estimation fuser **220** configured to fuse the first and second local ground plane estimations **LE1, LE2** to form a fused ground plane estimation **FE.** The obstacle perception system 200 further comprises an obstacle identifier **230** configured to identify an obstacle separated from ground using the fused ground plane estimation **FE.**

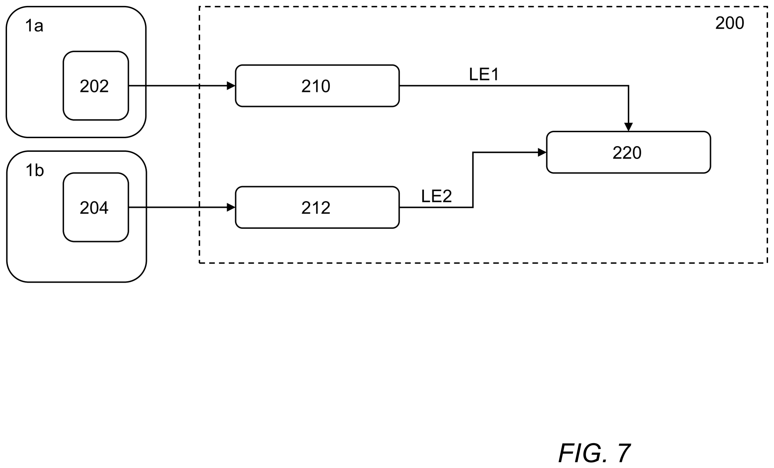

**FIG. 7** is a schematic layout of an obstacle perception system **200** according to an example. The obstacle perception system **200** comprises a first local ground plane estimation obtainer **210** configured to obtain a first local ground plane estimation **LE1** of a first ground area **GA1** based on a first set of LIDAR data **202** from a first vehicle **1a**. The obstacle perception system **200** comprises a second local ground plane estimation obtainer **212** configured to obtain a second local ground plane estimation **204** of a second ground area **GA2,** at least partly overlapping the first ground area **GA1**, based on a second set of LIDAR data **204** from a second vehicle **1b**. The obstacle perception system **200** comprises a local ground plane estimation fuser **220** configured to fuse the first and second local ground plane estimations **LE1, LE2** to form a fused ground plane estimation **FE.**

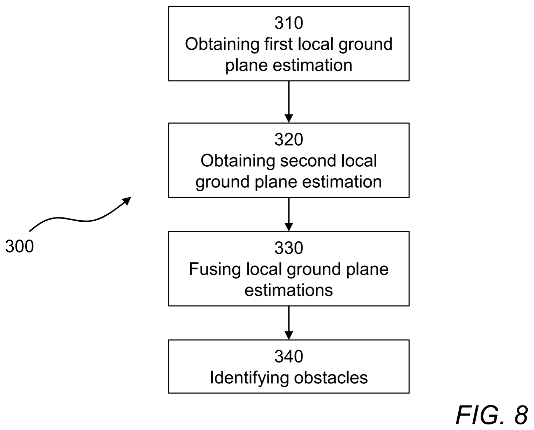

**FIG. 8** is a schematic example of a method **300** for obstacle perception or detection. Preferably, the method **300** is performed during operation of a vehicle **1,** such as an autonomous vehicle **1** travelling along a travel path **TP.** The method **300** comprises obtaining **310,** by processing circuitry of a computer system, a first local ground plane estimation **LE1** of a first ground area **GA1** based on a first set of LIDAR data **202.** The method **300** further comprises obtaining **320,** by the processing circuitry, a second local ground plane estimation **LE2** of a second ground area **GA2,** at least partly overlapping the first ground area **GA1,** based on a second set of LIDAR data **204.** The method **300** also comprises fusing **330,** by the processing circuitry, the first and second local ground plane estimations **LE1, LE2** to form a fused ground plane estimation **FE,** and identifying **340,** by the processing circuitry, an obstacle **9** separated from ground using the fused ground plane estimation **FE.**

Generally, the present disclosure provides examples of obstacle perception systems and methods. Such obstacle perception systems and methods, which may be configured and made operational in line with the previous descriptions, may comprise a central server **20** and a set of multiple vehicles **1,** such as working machines, wherein each vehicle **1** acts as an agent with its own perception system. Each vehicle **1** may implement an obstacle perception system with at least one LIDAR sensor **201** in each direction of travel. The obstacle perception system may comprise a local ground plane estimation obtainer configured to create a local ground plane estimation close to the sensor. The obstacle perception system may further comprise an uploader for uploading the local ground plane estimation to the central server **20.** Further, the obstacle perception system may comprise a fuser configured to fuse multiple local ground plane estimations from multiple agents, or vehicles **1,** to a fused ground plane estimation. The obstacle perception system may comprise a downloader configured to download the fused ground plane estimation to an agent. Yet further, the obstacle perception system may comprise an obstacle identifier configured to separate an obstacle from ground using the fused ground plane estimation.

The present disclosure provides for an obstacle perception method operating by the following features. Each vehicle **1,** or agent, in the multi agent system receives data from the LIDAR sensors **201.** The vehicle **1** performs a local ground plane estimation based on a set of LIDAR data within some range determined to produce a reliable local ground plane estimations. The agent uploads the local ground plane estimation to a central server **20.** The central server **20** fuses the new local ground plane estimation with the existing fused ground plane estimation. The central server **20** pushes the updated fused ground plane estimation to all agents in the system. The agent uses the fused ground plane estimation to separate the ground plane from the set of LIDAR input data and checks if there are any obstacles protruding from the ground plane. If any obstacles are found, an appropriate warning is transmitted to Virtual Driver System of that agent.

In order to reduce latency, fusing the local ground plane estimations may be performed already in the agent before sending the update to the server **20.** Further, the fused ground plane estimation may be saved by the server **20** so that yesterday's fused ground plane estimation can be used at the start of the next shift without the need to "dry-run" the system.

**FIG. 9** **is** a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device
interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system comprising processing circuitry configured to: obtain a first local ground plane estimation (LE1) of a first ground area (GA1) based on a first set of LIDAR data (202); obtain a second local ground plane estimation (LE2) of a second ground area (GA2), at least partly overlapping the first ground area (GA1), based on a second set of LIDAR data (204); fuse the first and second local ground plane estimations (LE1, LE2) to form a fused ground plane estimation (FE); and identify an obstacle separated from ground using the fused ground plane estimation (FE).

**Example 2:** The computer system of Example 1, wherein the second ground area (GA2) overlaps the first ground area (GA1) by an overlap portion (OP), and wherein the spatial resolution of the second set of LIDAR data (204) in said overlap portion (OP) is greater than the spatial resolution of the first set of LIDAR data (202) in said overlap portion (OP).

**Example 3:** The computer system of any of Examples 1-2, wherein the processing circuitry is further configured to: obtain the first and second set of LIDAR data (202, 204) from at least one LIDAR sensor (101) attached to one or more vehicles (1).

**Example 4:** The computer system of Example 3, wherein the processing circuitry is further configured to: obtain the first set of LIDAR data (202) when one vehicle (1a-g) is located at a first position along a travel path (TP), and obtain the second set of LIDAR data (204) when one vehicle (1a-g) is located at a second position downstream the travel path (TP).

**Example 5:** The computer system of any of Examples 1-4, wherein the processing circuitry is further configured to: identify an obstacle separated from ground using the fused ground plane estimation (FE) and a set of real time LIDAR data (206).

**Example 6:** The computer system of Example 5, wherein the set of real time LIDAR data (206) is the first or second set of LIDAR data (202, 204).

**Example 7:** The computer system of any of Examples 1-6, wherein the first set of LIDAR data (202) is provided by a first vehicle (1a), and wherein the second set of LIDAR data (204) is provided by a second vehicle (1b).

**Example 8:** The computer system of Example 7, wherein the processing circuitry is further configured to: upload each set of LIDAR data (202, 204) to a remote server (20); and transmit the fused ground plane estimation (FE) from the remote server (20) to the first and second vehicle (1a, 1b).

**Example 9:** The computer system of Example 7, wherein the processing circuitry is further configured to: upload each local ground plane estimation (LE1, LE2) to the remote server (20); and transmit the fused ground plane estimation (FE) from the remote server (20) to the first and second vehicle (1a, 1b).

**Example 10:** The computer system of Example 7, wherein the processing circuitry is further configured to: fuse the first and second local ground plane estimations (LE1, LE2) by implementing a fusing algorithm locally at the first and/or second vehicle (1a, 1b); upload the fused ground plane estimation (FE) to the remote server (20); and transmit the fused ground plane estimation (FE) from the remote server (20) to the first and second vehicle (1a, 1b).

**Example 11:** The computer system of any of Examples 7-10, wherein the processing circuitry is further configured to: identify an obstacle by implementing an obstacle detection algorithm locally at the first and/or second vehicle (1a, 1b).

**Example 12:** The computer system of any of the preceding Examples, wherein the processing circuitry is further configured to: obtain a third local ground plane estimation (LE3) of the first and/or second ground area (GA1, GA2) based on a third set of LIDAR data (208); and update the fused ground plane estimation (FE) based on the third local ground plane estimation (LE3).

**Example 13:** The computer system of Example 1, wherein the second ground area (GA2) overlaps the first ground area (GA1) by an overlap portion (OP), and wherein the spatial resolution of the second set of LIDAR data (204) in said overlap portion (OP) is greater than the spatial resolution of the first set of LIDAR data (202) in said overlap portion (OP); wherein the processing circuitry is further configured to: obtain the first and second set of LIDAR data (202, 204) from LIDAR sensors (201) attached to a first and a second vehicle (1a, 1b); obtain the first set of LIDAR data (202) when the first vehicle (1a) is located at a first position along a travel path (TP), and obtain the second set of LIDAR data (204) when the second vehicle (1b) is located at a second position downstream the travel path (TP); identify an obstacle (9) separated from ground using the fused ground plane estimation (FE) and the first or second set of LIDAR data (202, 204); wherein the processing circuitry is further configured to: upload each set of LIDAR data (202, 204) or each local ground plane estimation (LE1, LE2) to a remote server (20); and transmit the fused ground plane estimation (FE) from the remote server (20) to the first and second vehicle (1a, 1b); wherein the processing circuitry is further configured to: identify an obstacle (9) by implementing an obstacle detection algorithm locally at the first and/or second vehicle (1a, 1b); obtain a third local ground plane estimation (LE3) of the first and/or second ground area (GA1, GA2) based on a third set of LIDAR data (208); update the fused ground plane estimation (FE) based on the third local ground plane estimation (LE3); and store the updated fused ground plane estimation (FE).

**Example 14:** A computer system comprising processing circuitry configured to: obtain a first local ground plane estimation (LE1) of a first ground area (GA1) based on a first set of LIDAR data (202) from a first vehicle (1a); obtain a second local ground plane estimation (204) of a second ground area (GA2), at least partly overlapping the first ground area (GA1), based on a second set of LIDAR data (204) from a second vehicle (1b); and fuse the first and second local ground plane estimations (LE1, LE2) to form a fused ground plane estimation (FE).

**Example 15:** A vehicle comprising the computer system of any of Examples 1-14.

**Example 16:** A fleet of vehicles comprising at least a first vehicle and a second vehicle and a computer system of any of Examples 1-14.

**Example 17:** A computer-implemented method, comprising: obtaining, by processing circuitry of a computer system, a first local ground plane estimation of a first ground area based on a first set of LIDAR data; obtaining, by the processing circuitry, a second local ground plane estimation of a second ground area, at least partly overlapping the first ground area, based on a second set of LIDAR data; fusing, by the processing circuitry, the first and second local ground plane estimations to form a fused ground plane estimation; and identifying, by the processing circuitry, an obstacle separated from ground using the fused ground plane estimation.

**Example 18:** A computer-implemented method, comprising: obtaining, by processing circuitry of a computer system, a first local ground plane estimation of a first ground area based on a first set of LIDAR data from a first vehicle; obtaining, by the processing circuitry, a second local ground plane estimation of a second ground area, at least partly overlapping the first ground area, based on a second set of LIDAR data from a second vehicle; and fusing, by the processing circuitry, the first and second local ground plane estimations to form a fused ground plane estimation.

**Example 19:** A computer program product comprising program code for performing, when executed by the processing circuitry, the method of any of Examples 17-18.

**Example 20:** A non-transitory computer-readable storage medium comprising instructions, which when executed by the processing circuitry, cause the processing circuitry to perform the method of any of Examples 17-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
obtain a first local ground plane estimation (LE1) of a first ground area (GA1) based on a first set of LIDAR data (202);
obtain a second local ground plane estimation (LE2) of a second ground area (GA2), at least partly overlapping the first ground area (GA1), based on a second set of LIDAR data (204);
fuse the first and second local ground plane estimations (LE1, LE2) to form a fused ground plane estimation (FE); and
identify an obstacle (9) separated from ground using the fused ground plane estimation (FE).

2. The computer system of claim 1, wherein the second ground area (GA2) overlaps the first ground area (GA1) by an overlap portion (OP), and wherein the spatial resolution of the second set of LIDAR data (204) in said overlap portion (OP) is greater than the spatial resolution of the first set of LIDAR data (202) in said overlap portion (OP).

3. The computer system of any of claims 1-2, wherein the processing circuitry is further configured to:
obtain the first and second set of LIDAR data (202, 204) from at least one LIDAR sensor (101) attached to one or more vehicles (1), optionally wherein the processing circuitry is further configured to:
obtain the first set of LIDAR data (202) when one vehicle (1a-g) is located at a first position along a travel path (TP), and
obtain the second set of LIDAR data (204) when one vehicle (1a-g) is located at a second position downstream the travel path (TP).

4. The computer system of any of claims 1-3, wherein the processing circuitry is further configured to:
identify an obstacle separated from ground using the fused ground plane estimation (FE) and a set of real time LIDAR data (206), optionally wherein the set of real time LIDAR data (206) is the first or second set of LIDAR data (202, 204).

5. The computer system of any of claims 1-4, wherein the first set of LIDAR data (202) is provided by a first vehicle (1a), and wherein the second set of LIDAR data (204) is provided by a second vehicle (1b).

6. The computer system of claim 5, wherein the processing circuitry is further configured to:
upload each set of LIDAR data (202, 204) to a remote server (20); and
transmit the fused ground plane estimation (FE) from the remote server (20) to the first and second vehicle (1a, 1b), or
wherein the processing circuitry is further configured to:
upload each local ground plane estimation (LE1, LE2) to the remote server (20); and
transmit the fused ground plane estimation (FE) from the remote server (20) to the first and second vehicle (1a, 1b), or
wherein the processing circuitry is further configured to:
fuse the first and second local ground plane estimations (LE1, LE2) by implementing a fusing algorithm locally at the first and/or second vehicle (1a, 1b);
upload the fused ground plane estimation (FE) to the remote server (20); and
transmit the fused ground plane estimation (FE) from the remote server (20) to the first and second vehicle (1a, 1b).

7. The computer system of any of claims 5-6, wherein the processing circuitry is further configured to:
identify an obstacle (9) by implementing an obstacle detection algorithm locally at the first and/or second vehicle (1a, 1b).

8. The computer system of claim 1, wherein the second ground area (GA2) overlaps the first ground area (GA1) by an overlap portion (OP), and wherein the spatial resolution of the second set of LIDAR data (204) in said overlap portion (OP) is greater than the spatial resolution of the first set of LIDAR data (202) in said overlap portion (OP);
wherein the processing circuitry is further configured to:
obtain the first and second set of LIDAR data (202, 204) from LIDAR sensors (201) attached to a first and a second vehicle (1a, 1b);
obtain the first set of LIDAR data (202) when the first vehicle (1a) is located at a first position along a travel path (TP), and
obtain the second set of LIDAR data (204) when the second vehicle (1b) is located at a second position downstream the travel path (TP);
identify an obstacle (9) separated from ground using the fused ground plane estimation (FE) and the first or second set of LIDAR data (202, 204);
wherein the processing circuitry is further configured to:
upload each set of LIDAR data (202, 204) or each local ground plane estimation (LE1, LE2) to a remote server (20); and
transmit the fused ground plane estimation (FE) from the remote server (20) to the first and second vehicle (1a, 1b);
wherein the processing circuitry is further configured to:
identify an obstacle (9) by implementing an obstacle detection algorithm locally at the first and/or second vehicle (1a, 1b);
obtain a third local ground plane estimation (LE3) of the first and/or second ground area (GA1, GA2) based on a third set of LIDAR data (208);
update the fused ground plane estimation (FE) based on the third local ground plane estimation (LE3); and
store the updated fused ground plane estimation (FE).

9. A computer system comprising processing circuitry configured to:
obtain a first local ground plane estimation (LE1) of a first ground area (GA1) based on a first set of LIDAR data (202) from a first vehicle (1a);
obtain a second local ground plane estimation (204) of a second ground area (GA2), at least partly overlapping the first ground area (GA1), based on a second set of LIDAR data (204) from a second vehicle (1b); and
fuse the first and second local ground plane estimations (LE1, LE2) to form a fused ground plane estimation (FE).

10. A vehicle comprising the computer system of any of claims 1-9.

11. A fleet of vehicles comprising at least a first vehicle and a second vehicle and a computer system of any of claims 1-9.

12. A computer-implemented method, comprising:
obtaining, by processing circuitry of a computer system, a first local ground plane estimation of a first ground area based on a first set of LIDAR data;
obtaining, by the processing circuitry, a second local ground plane estimation of a second ground area, at least partly overlapping the first ground area, based on a second set of LIDAR data;
fusing, by the processing circuitry, the first and second local ground plane estimations to form a fused ground plane estimation; and
identifying, by the processing circuitry, an obstacle separated from ground using the fused ground plane estimation.

13. A computer-implemented method, comprising:
obtaining, by processing circuitry of a computer system, a first local ground plane estimation of a first ground area based on a first set of LIDAR data from a first vehicle;
obtaining, by the processing circuitry, a second local ground plane estimation of a second ground area, at least partly overlapping the first ground area, based on a second set of LIDAR data from a second vehicle; and
fusing, by the processing circuitry, the first and second local ground plane estimations to form a fused ground plane estimation.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
